# EUROPEAN PATENT APPLICATION

(11) **EP 2 139 213 A1**
(43) Date of publication of application: **30.12.2009**
(21) Application number: 08159254.5
(22) Date of filing: 27.06.2008
(51) Int. Cl.: H04M 3/42

(54) **Call services sharing within single/multiple subscriptions**

(71) Applicant: Alcatel Lucent, 75008 Paris (FR)
(72) Inventor: Satapathy, Santoshi, 600114, TAMIL NADU (IN)
(74) Representative: Sciaux, Edmond

(57) **Abstract**

A method of sharing call services between different end points within a single subscription or across multiple subscriptions is disclosed. The user invokes the services sharing service by dialing a service code and a service sharing identification is generated after the activation of the service and stored in the user data of one or more multiple subscriptions. The method includes initializing a request for sharing the service, sending a service update request to the database server, database server making updates with subscriptions and sending successful message to application server and application server sending successful alerts to the endpoints of the subscriptions. The method enables the use of multiple endpoints with multiple services in an efficient manner without extra payment and the transfer of entire subscription within different users and service providers.

## Description

### BACKGROUND

### Technical Field

The embodiments herein generally relate to telephone network management, and, more particularly, to use of call services in a telephone network.

### Description of the Related Art

The evolution of telecommunications has resulted in numerous options for handling incoming calls. These options include forwarding the call to another number, rejecting the call, placing the call on hold, and the like. Further, the advent of caller identification affords subscribers the ability to screen calls.

When communicating via a mobile communication system, in some cases a subscriber when on a call is called by a third party or the subscriber wants to communicate with a plurality of parties simultaneously. The GSM (Global System for Mobile communication) communication system supports this by offering supplementary services like call waiting, call holding, call forwarding on busy subscriber and multi party call. Supplementary services like call waiting, call holding, call forwarding on busy subscriber and conference calls are provided by the network and are activated by the mobile user.

Advances in telecommunications technology now allow telecommunication service providers to offer a rich array of telecommunications services. Most services typically require advance subscription by a subscriber. A subscriber makes a conscious decision to subscribe a service by providing the service provider with the appropriate billing information to enable the service provider to charge the subscriber for the requested service. Some telecommunications service providers offer the same services on both a subscription basis and on a per-use basis. A potential candidate subscriber seeking to use such services does so by entering a DTMF digit or sequence of digits to select the service, whereupon the service provider provides the service and bills the subscriber accordingly.

In a case, the user has one subscription or multiple subscriptions or one or two endpoints having multiple call services like call-hold, call-waiting, call-transfer and so on, the user might want to share call services among the subscriptions. But there exist no current implementations for one endpoint to transfer the call related services to another endpoint other than the second subscription going for a new service registration.

### SUMMARY

In view of the foregoing, an embodiment herein provides a method and a system of sharing of call services by a user between a first endpoint belonging to the user and a second endpoint, with the first endpoint having at least one subscription, the method comprising steps of the user sending an invitation message, where the invitation message comprises a service code and a request message in a Request-URI header of an INVITE message, wherein the request message comprises subscription information and a user-defined password from the first endpoint; an application server with which the user is registered, where the application server is a FS5000, activating sharing of services between the first point and the second endpoint, on receipt of the invitation message; the application server updating a services-table in a server, which may be a database server; the application server checking the services-table, on the user invoking sharing of services; and the application server transferring a call on basis of the services-table. A Call Session Controller (CSC) transfers messages between the first and second points and the application server, where the CSC may be a Softswitch-5020 CSC. The activation of sharing of call services comprises steps of the CSC forwarding the invitation to a corresponding Application Server; the Application Server sending a confirmation to the CSC; the CSC forwarding the confirmation to the first endpoint; the Application Server sending notifications to the first endpoint and the second endpoint; the first endpoint and the second endpoint sending confirmations to the CSC; the CSC forwarding the confirmations to the Application Server; the Application Server sending a request to the server for updating endpoint related data in the services-table with a service sharing identification with a push-data-request (PDR) message, where the PDR message is diameter protocol message, generated by the server; the server replying to the Application Server with the service sharing identification with a push-data-answer (PDA) message, where the PDA message is a diameter protocol message; the Application Server sending messages notifying successful activation of the call sharing services to the first endpoint and the second endpoint; the first endpoint and the second endpoint sending confirmation messages to the CSC; and the CSC forwarding the confirmation messages to the application server. The services-table comprises of fields Service-Name; Associated-with-IM Public Identity (IMPU); Target; and Service Sharing Identification.
The application server checking the services-table comprises steps of the application server checking for service sharing identification associated with the first endpoint, on the user invoking sharing of call services by dialing a service code; the application server fetching user data and service sharing identification from the server, wherein the user data and the service sharing identification are present in the service table; the application server checking for the service sharing identification associated with the first endpoint in the service table; the application server invoking sharing of a subscription on basis of the target field in corresponding entry of the service sharing identification in the services-table; and the application server initiating online charging, on a subscription being invoked.

Embodiments further disclose an application server comprising of atleast one means adapted to send a confirmation message to the CSC on receipt of the invitation from the user; ensure the readiness of the first and second endpoints; send a request to the server for updating data related to the first endpoint; send messages to the first and second endpoints, on successful activation of sharing of call services; check for service sharing identification associated with the first endpoint in the services-table, on the call service being invoked; invoke the call service on basis of the target field of corresponding service sharing identification in the services-table.

Embodiments further disclose a server, which is a database server, comprising of at least one means adapted to generate the service sharing identification, on receipt of a request from the application server to update data related to the first and second endpoints in the services-table; store the service sharing identification in the services-table; and send a message to the application server with the service sharing identification, where the message is a push-data-answer (PDA), which is a data protocol message.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein without departing from the spirit thereof, and the embodiments herein include all such modifications.

### BRIEF DESCRIPTION OF THE DRAWINGS

The embodiments herein will be better understood from the following detailed description with reference to the drawings, in which:

FIG. 1 is a block diagram depicting the call services sharing service in a telecom network, according to an embodiment herein;

FIG. 2 illustrates a schematic diagram depicting the call flow for service sharing service, according to an embodiment herein;

FIG. 3 illustrates a flowchart depicting a method of processing call flow in service sharing in a telecom network, according to an embodiment herein;

FIG. 4 illustrates a schematic diagram depicting the invocation of a call sharing service, according to an embodiment herein; and

FIG. 5 illustrates a flowchart depicting a method of sharing call services in a telecom network, according to an embodiment herein.

### DETAILED DESCRIPTION OF PREFERRED EMBODIMENTS

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

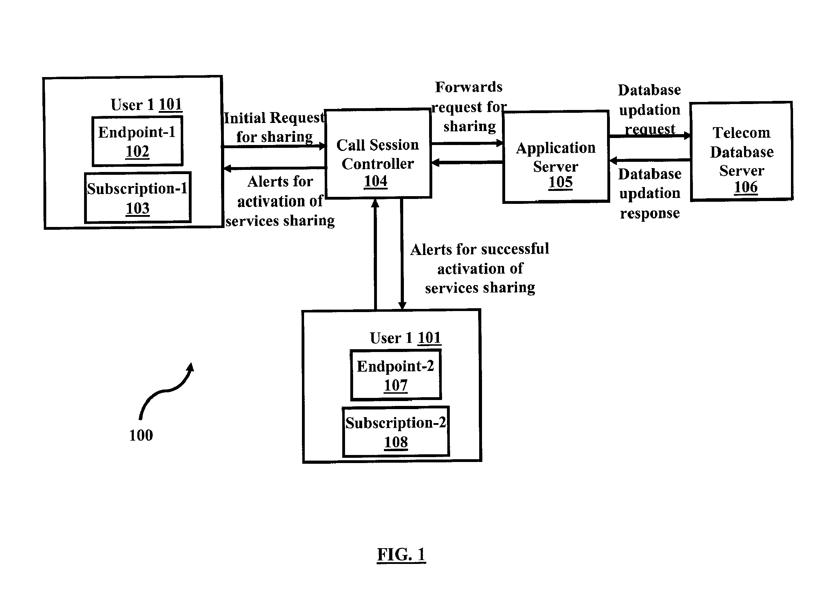

The embodiments herein achieve a method for sharing or shifting of call services from endpoint to another endpoint, wherein said endpoints may be within one subscription or within multiple subscriptions. The call services may be call waiting, call holding, call forwarding on busy subscriber, conference calls. Referring now to the drawings, and more particularly to FIGS. 1 through 5, where similar reference characters denote corresponding features consistently throughout the figures, there are shown preferred embodiments.

The embodiments herein disclose a method to allow a single user having one or multiple subscriptions to share call related services like call transfer, call forwarding, call barring and the like of one endpoint to at least one another endpoint,
where each endpoint are attached to at least one subscription. The user sends an INVITE message with service code to invoke the call sharing service. A service sharing identification is generated after the activation of the service and stored in the user data of one or more multiple subscriptions. Further, the application server checks for service sharing identification associated with the user and provides the requested service by sending successful alerts to both endpoints of the subscriptions. The user can use different call services in the second endpoint without new registration for the call services. The user needs to have at least one endpoint per subscription and the user can transfer the entire subscription related values, like call services, data and so on. Also the subscription related transfer can be done between different users and different service providers.

FIG. 1 is a block diagram 100 depicting call services sharing service in a telephone network, according to the embodiments as disclosed herein. The user- 1 101 dials the service code and sends a request to the application server 105 for sharing a service via the Call session controller (CSC) 104. The service code includes first subscription information, second subscription information and user defined data. The service code is a special telephone number usually beginning with a *(star) key on the touch tone keypad, which enables the user to access the telephone company services. The CSC 104 receives the request and forwards the request to the application server 105 with whom user- 1 101 is registered. The application server 105 sends successful alerts to both the endpoints of user-1 101 via CSC 104, where the application server 105 handles most of the business logic and data access operations in the network. The application server 105 fetches the request and sends a service update request to a database server 106, where the database server 106 provides database services to the other elements of the network.
The database server 106 makes necessary updates with subscription-1 103 and subscription-2 108 of user-1 101 and sends a successful message to application server 105. The application server 105 then sends alerts to the endpoint-1 102 of subscription-1 103 and endpoint-2 107 of subscription -2 108 for successful activation of services sharing. The user-1 101 can use different call services in subscription-2 107 without new registration of the call services.

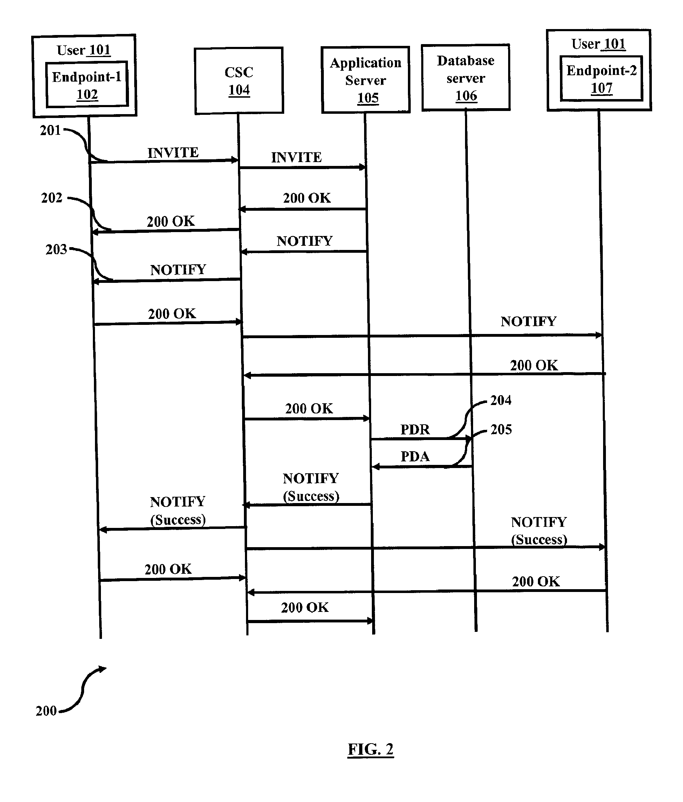

FIG. 2 illustrates a schematic diagram depicting the call flow for service sharing service. The user-1 101 sends an INVITE 201 message with service code of call sharing service in REQUEST - URI header along with private user identity of all endpoints belonging to one or multiple subscriptions. The user data may be sent with P-asserted-identity header of INVITE 201 message. Call Session Controller (CSC) 202 receives the INVITE 201 message and forwards the message to the application server 105 with which User- 1 101 is registered. Application server 106 then sends a 200 OK message 202 back to CSC 104 notifying the handling of the request and CSC 104 forwards the 200 OK message 202 to endpoint-1 102. Further, application server 105 sends two NOTIFY messages 203 to endpoint-1 102 and endpoint-2 107 through CSC 104. The end points reply with 200 OK messages 202 for the NOTIFY message 203 ensuring the readiness of endpoint-1 102 and endpoint-2 107. The application server 105 then sends a push-data-request (PDR) 204 to database server 106 for updating endpoint related data. A service sharing identification for endpoint 1 102 is generated within database server 106 and linked with endpoint-2's 107 user data. The database server 106 replies with a push-data-answer (PDA) message 205 to application server 105. The application server 105 sends two NOTIFY messages 203 to endpoint-1 102 and endpoint-2 107 for successful activation of service and the endpoints reply with 200 OK messages 202 to application server 105 through CSC 104 enabling endpoint-2 107 to use endpoint-1's 102 call services like call-hold, and call-waiting with minimal charges. In the embodiment, both PDR and PDA are diameter protocol messages.

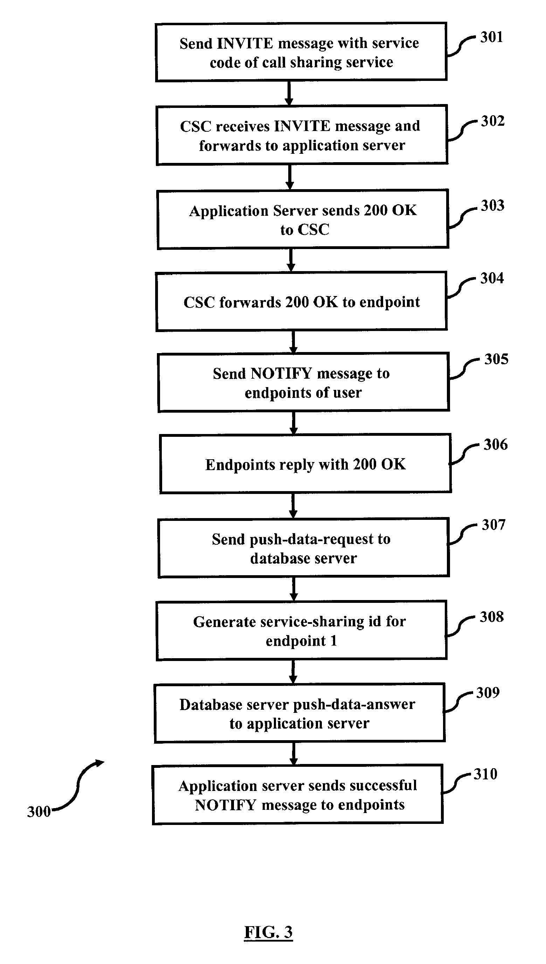

FIG. 3 illustrates a flowchart depicting a method of processing call flow in service sharing in a telecommunications network, according to an embodiment as disclosed herein. The user sends (301) an INVITE message with service code of call sharing service in Request-URI header along with user defined data of all endpoints of single or multiple subscriptions. CSC receives (302) the INVITE 201 message and forward to the application server 105 with which the user is registered. The application server 105 sends (303) 200 OK message 202 to CSC 104 notifying the handling of the request. CSC 104 then forwards (304) the 200 OK message 202 to the endpoint-1 102 of user. The application server 105 then sends (305) two NOTIFY message 203 to the endpoint-1 102 and endpoint- 2 107 of the user via CSC 104. The endpoint-1 102 and endpoint- 2 107 responds (306) with 200 OK message 202 for the NOTIFY message 203 and ensures the readiness of endpoint-1 102 and endpoint- 2 107. Further, the application server 105 sends (307) a push-data-request (PDR) message 204 to database server 106 for updating user related credentials. A service sharing identification for endpoint-1 102 is generated (308) within the database server 106 and linked with endpoint-2's 107 related user data. After the service sharing identification is generated, the database server 106 replies (309) with a push-data-answer message 205 to the application server 105. Thereafter, the application server 105 sends (310) two NOTIFY messages 204 to endpoint-1 102 and endpoint- 2 107 for successful activation of the service. Thereafter, the endpoint-2 107 can use endpoint-1's 102 call services like call-hold, call-waiting with minimal charges easily. The various actions in method 300 may be performed in the order presented, in a different order or simultaneously. Further, in some embodiments, some actions listed in FIG. 3 may be omitted.

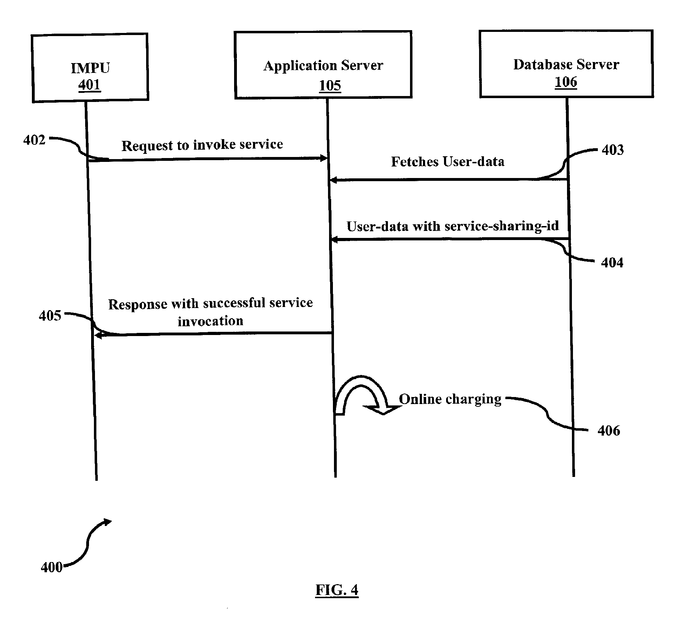

FIG. 4 illustrates a schematic diagram depicting the invocation of a call sharing service, according to an embodiment as disclosed herein. IP Multimedia Public Identity (IMPU) 401 sends a request 402 to application server 105 to invoke a service. IMPU refers to the ID used by the first endpoint to identify the endpoint over the network. An IMPU is a Uniform Resource Identifier (URI), which may take the form of a string of alphanumeric characters or a string of numbers. The application server 105 fetches user data 403 and sends the user data 403 to database server 106. The database server 106 checks for service sharing identification associated with IMPU 401. In database server 106 the user data for single subscription with multiple endpoints may be stored in the following format: 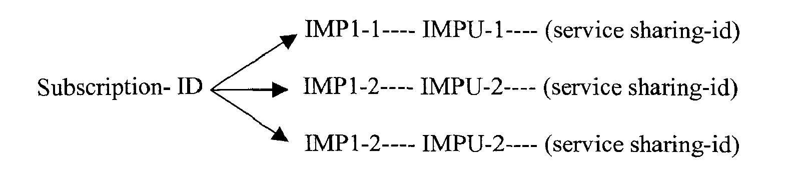 The user data for multiple subscriptions with same operator is stored in database server 106 may be stored in the following format: 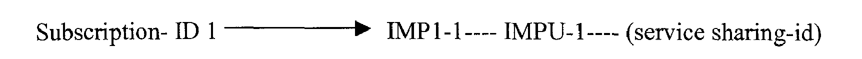 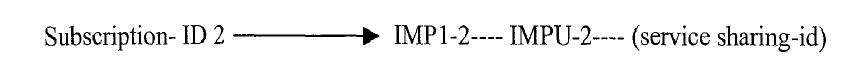 The service sharing identification is generated after the activation of sharing service and is stored as an extra field in the user-data of single or multiple subscriptions. The service sharing identification field is associated with all IMPUs and present as a foreign-key according to database terminology in services-table. The implementation of services-table is as shown in Table 1.

**Table 1: Structure of Services-table**

| **SERVICE NAME** | **ASSOCIATED WITH IMPU** | **TARGET** | **SERVICE SHARING IDENTIFICATION** |
|---|---|---|---|
| Call-Forwarding | IMPU-1 | 9122005 | SS |
| Call-Transfer | IMPU-1 | 9222222 | SS |

The database server 106 sends the user-data with service sharing identification 404 associated with the IMPU 401 to the application server 105. The application server 105 then checks for service sharing identification associated with IMPU in services-table and find the service sharing identification "SS" for the particular IMPU. The application server 105 then responds with successful service invocation 405 to IMPU 401. Online charging (ACR records generation) 406 starts for IMPU 401 inside the application server 105 and may start sequentially or simultaneously.

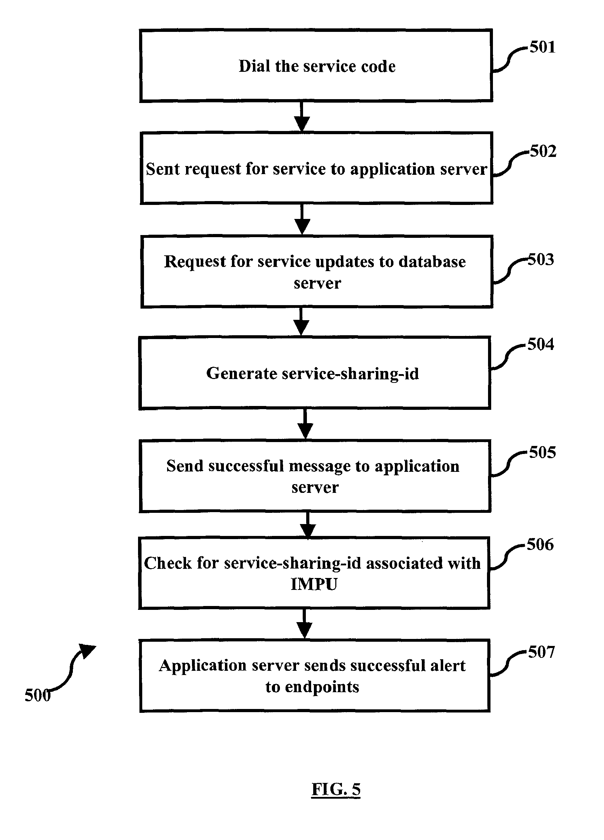

FIG. 5 illustrates a flowchart depicting a method of sharing call services in a telecommunications network, according to an embodiment as disclosed herein. The user dials (501) the service code and sends (502) a request for call sharing service to the application server 105. The application server 105 accepts the request and sends (503) a service update request to the telecommunications database server 106. The database server 106 generates (504) service sharing identification after the activation of the sharing service and stores as an extra field in user data of a single or multiple subscriptions. The database server 106 induces (505) necessary updates with the subscriptions and further sends a successful message to application server 105. The application server 105 then checks (506) for service sharing identification associated with the IMPU 401. Thereafter, the application server 105 finds the service sharing identification and sends (507) successful alerts to endpoint-1 102 and endpoint-2 107 of the subscriptions. The various actions in method 500 may be performed in the order presented, in a different order or simultaneously. Further, in some embodiments, some actions listed in FIG. 5 may be omitted.

According to an embodiment disclosed herein, a call- transfer may be invoked for an IMPU3. The application server 105 then checks for service sharing identification associated with IMPU3 and finds the service sharing identification "SS". Further, the application server 105 checks for "SS" in services-table for call-transfer service and on detection of the call-transfer, the call are transferred according to the target.

According to an embodiment disclosed herein provides a method for the user to deactivate the sharing of services between various endpoints by dialing a service code for deactivation of the sharing service.

The embodiments disclosed herein enable the customer to use multiple endpoints with multiple services over any telecommunication network in an efficient manner without paying extra cost to the service provider. The embodiments disclosed herein may be implemented in application server FS5000. The embodiments disclose the use of CSC as the call controller, however, said embodiments may be implemented using any call controller for IMS and non-IMS networks. The embodiments disclosed herein may be implemented using a Softswitch-5020 CSC.

The embodiments herein disclose sharing of call services between endpoints belonging to the same user with the endpoints belonging to the same service provider. However, it is obvious to a person skilled in the art that embodiments herein disclose sharing of call services between endpoints belonging to the same user with the endpoints belonging to the same service provider as an example and the embodiments as disclosed herein are applicable to sharing of call services between endpoints belonging to different users and where the endpoints may belong to different service providers.

The list of structures corresponding to the claimed means is not exhaustive and that one skilled in the art understands that equivalent structures can be substituted for the recited structure without departing from the scope of the invention.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope of the appended claims.

## Claims

1. A method of sharing of call services in a telecommunications network between a first endpoint (102) and a second endpoint (107), wherein said telecommunications network comprises of an application server (105), a Call Session Controller (CSC) (104) and a server (106), with said first endpoint (102) attached to at least one subscription, said method comprising steps of
sending (301) an invitation message from said first endpoint (102) to said network;
registering (305, 306, 307, 308, 309, 310) sharing of services between said first endpoint (102) and said second endpoint (107), on receipt of said invitation message;
checking (506) a services-table to identify target endpoint, on said user invoking sharing of services; and
transferring (507) one or more call services on basis of said services-table, on checking (506) said services-table to identify said target endpoint.

2. The method of sharing of call services, as claimed in method 1, wherein said invitation message (201) comprises a service code and a request message in a Request-URI header of an INVITE message, wherein said request message comprises subscription information and a user-defined password.

3. The method of sharing of call services, as claimed in claim 1, wherein said user is registered with said application server (105).

4. The method of sharing of call services, as claimed in claim 1, wherein said CSC (104) transfers messages between said first endpoint (102) and said second endpoint (107) and said application server (105).

5. The method of sharing of call services, as claimed in claim 1, wherein registration of sharing of call services comprises steps of
forwarding (302) said invitation (201) to corresponding Application Server (105);
sending (303) a confirmation to (202) said CSC (104), on receipt of said invitation (201);
forwarding (304) said confirmation (202) to said first endpoint (102);
sending (305) notifications (203) to said first endpoint (102) and said second endpoint (107);
sending (306) confirmations to said CSC (104), on receipt of said notifications (203);
forwarding (306) said confirmations to said Application server (105);
sending (307) a request (204) to said server (106) for updating endpoint related data in said services-table with a service sharing identification;
replying (309) to said Application server (105) with said service sharing identification, on updating (308) endpoint related data in said services-table;
sending (310) messages notifying successful activation of said call sharing services to said first endpoint (102) and said second endpoint (107), on receipt of reply from said server (106);
sending (311) confirmation messages to said CSC (104), on receipt of said messages notifying activation of said call sharing services; and
forwarding (312) said confirmation messages to said application server (105).

6. The method of sharing of call services, as claimed in claim 1, wherein said application server (105) checking said services-table comprises steps of
checking for service sharing identification associated with said first endpoint (102) , on said user invoking (501, 502) sharing of call services;
fetching (505) user data and service sharing identification from said server (106), wherein said user data and said service sharing identification are present in said service table;
checking (506) for said service sharing identification associated with said first endpoint (102) in said service table;
invoking (507) sharing of a subscription on basis of said target field in corresponding entry of said service sharing identification in said services-table; and
initiating (406) online charging, on a subscription being invoked.

7. A system for sharing of call services in a telecommunications network between a first endpoint (102) and a second endpoint (107), wherein said telecommunications network comprises of an application server (105), a Call Session Controller (CSC) and a server, with said first endpoint (102) attached to at least one subscription, said system comprising of at least one means adapted to
register (305, 306, 307, 308, 309, 310) sharing of services between said first point (102) and said second endpoint (107), on receipt of an invitation from said user;
update (204) a services-table in a server (106);
check (506) said services-table, on said user invoking sharing of services; and
transfer (507) a call on basis of said service table.

8. The system, as claimed in claim 7, wherein said CSC (104) is present between said first endpoint (102) and said second endpoint (107) and said application server (105).

9. The system, as claimed in claim 7, wherein said application server (105) is adapted to send (307) an indication to said server (106) update said services-table with a push-data-request (PDR) message, wherein said PDR message is diameter protocol message.

10. The system, as claimed in claim 7, wherein said server (106) is adapted to reply (309) to said application server (105) with a push-data-answer (PDA) message, wherein said PDA message is a diameter protocol message.

11. An application server (105) comprising of at least one means adapted to
send (303) a confirmation message to said CSC (104) on receipt of an invitation message from user of a first endpoint (102);
send (308) a request to said server (106) for updating data related to said first endpoint (102);
send (310) messages to said first endpoint (102) and said second endpoint (107), on successful activation of sharing of call services;
check (506) for service sharing identification associated with said first endpoint (102) in said services-table, on said call service being invoked;
invoke (507) said call service on basis of said target field of corresponding service sharing identification in said services-table.

12. An application server (105), as claimed in claim 11, wherein said application server (105) ensures (305, 306) readiness of said first endpoint (102) and said second endpoint (107), on receipt of said invitation message.

13. A server (106) comprising of at least one means adapted to
generate (308) a service sharing identification, on receipt (307) of a request from an application server (105) to update data related to first and second endpoints (102, 107) in a services-table;
store (308) said service sharing identification in said services-table; and
send (309) a message to said application server (105) with said service sharing identification.

## Amended claims

### Amended claims in accordance with Rule 137(2) EPC.

**1.** A method of sharing of call services in a telecommunications network between a first endpoint (102) and a second endpoint (107), wherein said telecommunications network comprises of an application server (105), a Call Session Controller (CSC) (104) and a server (106), with said first endpoint (102) attached to at least one subscription, said method comprising steps of
sending (301) an invitation message from said first endpoint (102) to said network;
registering (305, 306, 307, 308, 309, 310) sharing of services between said first endpoint (102) and said second endpoint (107), on receipt of said invitation message;
checking (506) a services-table to identify target endpoint, on said user invoking sharing of services; and
transferring (507) one or more call services on basis of said services-table, on checking (506) said services-table to identify said target endpoint.;
**characterized in that** said invitation message (201) comprises subscription information.

**2.** The method of sharing of call services, as claimed in method 1, wherein said invitation message (201) comprises a service code and a request message in a Request-URI header of an INVITE message, wherein said request message comprises subscription information and a user-defined password.

**3.** The method of sharing of call services, as claimed in claim 1, wherein said user is registered with said application server (105).

**4.** The method of sharing of call services, as claimed in claim 1, wherein said CSC (104) transfers messages between said first endpoint (102) and said second endpoint (107) and said application server (105).

**5.** The method of sharing of call services, as claimed in claim 1, wherein registration of sharing of call services comprises steps of
forwarding (302) said invitation (201) to corresponding Application Server (105);
sending (303) a confirmation to (202) said CSC (104), on receipt of said invitation (201);
forwarding (304) said confirmation (202) to said first endpoint (102);
sending (305) notifications (203) to said first endpoint (102) and said second endpoint (107);
sending (306) confirmations to said CSC (104), on receipt of said notifications (203);
forwarding (306) said confirmations to said Application server (105);
sending (307) a request (204) to said server (106) for updating endpoint related data in said services-table with a service sharing identification;
replying (309) to said Application server (105) with said service sharing identification, on updating (308) endpoint related data in said services-table;
sending (310) messages notifying successful activation of said call sharing services to said first endpoint (102) and said second endpoint (107), on receipt of reply from said server (106);
sending (311) confirmation messages to said CSC (104), on receipt of said messages notifying activation of said call sharing services; and
forwarding (312) said confirmation messages to said application server (105).

**6.** The method of sharing of call services, as claimed in claim 1, wherein said application server (105) checking said services-table comprises steps of
checking for service sharing identification associated with said first endpoint (102) , on said user invoking (501, 502) sharing of call services;
fetching (505) user data and service sharing identification from said server (106), wherein said user data and said service sharing identification are present in said service table;
checking (506) for said service sharing identification associated with said first endpoint (102) in said service table;
invoking (507) sharing of a subscription on basis of said target field in corresponding entry of said service sharing identification in said services-table; and
initiating (406) online charging, on a subscription being invoked.

**7.** A system for sharing of call services in a telecommunications network between a first endpoint (102) and a second endpoint (107), wherein said telecommunications network comprises of an application server (105), a Call Session Controller (CSC) and a server, with said first endpoint (102) attached to at least one subscription, said system comprising of at least one means adapted to
register (305, 306, 307, 308, 309, 310) sharing of services between said first point (102) and said second endpoint (107), on receipt of an invitation from said user;
update (204) a services-table in a server (106);
check (506) said services-table, on said user invoking sharing of services; and
transfer (507) a call on basis of said service table;
**characterized in that** said means adapted to register sharing of services and to update a services-table, comprise means for receiving an invitation message (201) comprising private user identity of all endpoints belonging to at least one subscription.

**8.** The system, as claimed in claim 7, wherein said CSC (104) is present between said first endpoint (102) and said second endpoint (107) and said application server (105).

**9.** The system, as claimed in claim 7, wherein said application server (105) is adapted to send (307) an indication to said server (106) update said services-table with a push-data-request (PDR) message, wherein said PDR message is diameter protocol message.

**10.** The system, as claimed in claim 7, wherein said server (106) is adapted to reply (309) to said application server (105) with a push-data-answer (PDA) message, wherein said PDA message is a diameter protocol message.

**11.** An application server (105) comprising of at least one means adapted to
send (303) a confirmation message to said CSC (104) on receipt of an invitation message from user of a first endpoint (102);
send (308) a request to said server (106) for updating data related to said first endpoint (102);
send (310) messages to said first endpoint (102) and said second endpoint (107), on successful activation of sharing of call services;
check (506) for service sharing identification associated with said first endpoint (102) in said services-table, on said call service being invoked;
invoke (507) said call service on basis of said target field of corresponding service sharing identification in said services-table.

**12.** An application server (105), as claimed in claim 11, wherein said application server (105) ensures (305, 306) readiness of said first endpoint (102) and said second endpoint (107), on receipt of said invitation message.

**13.** A server (106) comprising of at least one means adapted to
generate (308) a service sharing identification, on receipt (307) of a request from an application server (105) to update data related to first and second endpoints (102, 107) in a services-table;
store (308) said service sharing identification in said services-table; and
send (309) a message to said application server (105) with said service sharing identification.
